# EUROPEAN PATENT SPECIFICATION

(11) **EP 4 024 786 B1**
(45) Date of publication and mention of the grant of the patent: **07.05.2025**
(21) Application number: 20862833.9
(22) Date of filing: 08.09.2020
(51) Int. Cl.: H04L 45/02

(54) **SERVICE ROUTING METHOD AND APPARATUS**
DIENST-ROUTING-VERFAHREN UND -VORRICHTUNG
PROCÉDÉ ET APPAREIL D'ACHEMINEMENT DE SERVICE

(30) Priority: 12.09.2019 CN 201910867138
(43) Date of publication of application: 06.07.2022
(73) Proprietor: Huawei Technologies Co., Ltd., Longgang District Shenzhen, Guangdong 518129 (CN)
(72) Inventor: YANG, Xiaomin, Shenzhen, Guangdong 518129 (CN); GU, Shuheng, Shenzhen, Guangdong 518129 (CN); ZHUANG, Guanhua, Shenzhen, Guangdong 518129 (CN); LI, Feng, Shenzhen, Guangdong 518129 (CN)
(74) Representative: Maiwald GmbH
(86) International application number: PCT/CN2020/114060
(87) International publication number: WO 2021/047515

(56) References cited:
- CN-A- 108 134 828
- CN-A- 109 542 641
- CN-A- 109 565 472
- CN-A- 110 198 516
- US-A1- 2006 120 391
- US-A1- 2014 330 985
- US-A1- 2019 132 220
- US-B2- 11 165 689

## Description

### TECHNICAL FIELD

This application relates to the field of communications technologies, and in particular, to a service routing method and apparatus.

### BACKGROUND

In a compute first network (compute first network, CFN), a service identifier (identifier, ID) replaces an Internet protocol (internet protocol, IP) address of a service node, to serve as a destination address of a packet. In other words, edge computing nodes providing a same service expose a same IP address (namely, the service ID) to the CFN. When a user initiates a service request, a computing router/computing node (hereinafter referred to as a CFN router/CFN node) may select, based on the service ID, a status of a real-time network, and a status of a service, an appropriate service node from a plurality of service nodes to provide a service for the user.

During service routing, the CFN router needs to ensure flow affinity for service packets belonging to a same session, that is, the service packets belonging to the same session are directed to a same service node. Usually, a path information table is established in the CFN router based on a service attribute. The path information table records path information of the session, for example, information such as a source address, a service ID, and an IP address of the service node. Therefore, the service packets belonging to the same session may be directed to the same service node based on the path information table.

Emergence of edge computing and the Internet of things brings massive accessing. To forward a service packet at a line rate and maintain flow affinity for each session, the CFN router needs to create a large quantity of session flow tables, and costs of the CFN router are large.

In US 2006/120391 A1, nodes in a network are operable to provide an information service. A set of the nodes having a highest workload are identified by routing a list of workloads for the nodes through the network to a final destination. Each node receiving the list determines whether to include a workload of a respective node in the list.

US 2014/330985 A1 involves information routing in networks, and, more specifically, to defining a framework using swarm intelligence and utilization of the defined framework for routing information in the network, especially for cloud computing applications. For example, information about available information/services is pushed to network nodes using information packets (ants). Nodes requiring services send query packets (ants) and a node may send a response to a query ant when information is available. Ants may be forwarded throughout the network based on popularity of nodes, freshness of information/requests, routing table information, and requests or interest by consumer nodes captured in information routing table.

In CN 109 565 472 A, routing packets through a virtual network (VN) in support of service-based traffic forwarding is provided. Data packets are routed using a virtual router (v-router) toward a destination end point overa pre-configured VN. The v-router is associated with a VN node, which is associated with a physical network node (NN). A data packet associated with the VN is received and a name identifier of the destination end point is specified. A location corresponding to the name identifier is obtained. An indication of a destination VN node corresponding to the location is obtained. An indication of a nextVN node on a path between the virtual router and the destination VN node is obtained. The indication of the next VN node is inserted into the packet to produce a routed packet. The routed packet is submitted to the associated NN for transmission toward the next node.

### SUMMARY

This invention provides a service routing method and apparatus, to resolve a current problem of large costs of a CFN router. The invention is defined by the appended set of claims.

### BRIEF DESCRIPTION OF DRAWINGS

FIG. 1 is a schematic diagram of flow affinity of a session according to this application;
FIG. 2 is a schematic diagram of a matching process of 2-tuple information according to this application;
FIG. 3 is a schematic diagram of an architecture of a communications system according to this application;
FIG. 4 is a schematic diagram of an architecture of a communications system according to this application;
FIG. 5 is a schematic flowchart of a service routing method according to this application;
FIG. 6A is a schematic diagram of encoding according to this application;
FIG. 6B is a schematic diagram of packet directing according to this application;
FIG. 7 is a schematic diagram of a process in which a vCFN obtains path information according to this application;
FIG. 8 is a schematic diagram of a process in which a client node sends a subsequent packet according to this application;
FIG. 9 is a schematic diagram of another process in which a vCFN obtains path information according to this application;
FIG. 10 is a schematic diagram of still another process in which a vCFN obtains path information according to this application;
FIG. 11 is a schematic diagram of a process in which a client node sends a subsequent packet to a first service node according to this application;
FIG. 12 is a schematic diagram of yet another process in which a vCFN obtains path information according to this application;
FIG. 13 is a schematic diagram of a process of flow affinity of a session according to this application;
FIG. 14 is a schematic diagram of another process in which a client node sends a subsequent packet to a first service node according to this application;
FIG. 15 is a schematic diagram of a structure of a service routing apparatus according to this application; and
FIG. 16 is a schematic diagram of a structure of a service routing apparatus according to this application.

### DESCRIPTION OF EMBODIMENTS

To facilitate understanding of embodiments of this application, the following describes terms related to the embodiments of this application.
1. Service identifier (Service ID): Currently, an IP anycast (internet protocol anycast, IP anycast) technology may be used for addressing between different edge computing nodes. In other words, edge computing nodes (which may also be referred to as service nodes) that provide a same service exposes a same Internet protocol (internet protocol, IP) address to a network, and the IP address may be considered as a service ID. Alternatively, it may be understood that service nodes that provide a same service correspond to a same identifier, and the identifier is a service ID.
2. Service IP (Service IP) address: A service IP address is an IP address of a service node.
3. CFN RIB: A routing node obtains a computing routing table of a service ID based on a service distribution protocol and a measured network status.

The following clearly and completely describes technical solutions in the embodiments of the present application with reference to the accompanying drawings in the embodiments of the present application.

With emergence of 5G, a smart city, and the Internet of things, analysis and storage of massive data impose high requirements on network bandwidth. Because an end-user device (for example, user equipment) generates a plurality of data flows, a real-time decision cannot be made through cloud computing processing and analysis. Consequently, a severe network latency is caused. Therefore, in comparison with cloud computing, a service is provided for user equipment by using an edge computing node (for example, an access server or an aggregation server that is near to a user). Due to a short transmission path and a low latency, network overheads caused by the service and network waiting time can be greatly reduced.

Currently, in a computing first network (computing first network, CFN), a service ID replaces a service IP address, to serve as a destination address of a packet. A computing router/computing node (hereinafter referred to as a CFN router/CFN node) may select, based on a status of a real-time network and a status of a service, an appropriate service node in a plurality of service nodes for accessing.

Due to a dynamic feature (for example, service load or network congestion) of the service and the network, the CFN router may select different service nodes for addressing based on a same service ID at different moments. During service routing, the CFN router needs to ensure flow affinity for packets belonging to a same session, that is, the packets belonging to the same session are directed to a same service node. Usually, a path information table is established in the CFN router based on an attribute of a service. The path information table records a 5-tuple flow table or a 2-tuple flow table of a session. The 5-tuple flow table may include a source address (SRC IP for short), a source port (SRC PORT for short), a service ID (SERV ID for short), a service port (SERV PORT for short), a transmission protocol (protocol for short), and path information (PATH INFO for short). As shown in Table 1, the path information may be Service IP: Service ID, or may be CFN ID: Service IP: Service ID. As shown in Table 2, the 2-tuple flow table may include a source address (SRC IP), a SERV ID, and path information.

**Table 1**

| SRC IP | SRC PORT | SERV ID | SERV PORT | Protocol | PATH INFO |
|---|---|---|---|---|---|
| 10.197.1.1 | 2093 | 10.10.10.1 | 8060 | TCP | Service IP: Service ID |
| | | | | | or CFN ID: Service IP: Service ID |

**Table 2**

| SRC IP | SERV ID | Protocol | PATH INFO |
|---|---|---|---|
| 10.197.1.1 | 10.10.10.1 | TCP | Service IP: Service ID |
| | | | or CFN ID: Service IP: Service ID |

A transmission control protocol (transmission control protocol) is referred to as TCP for short.

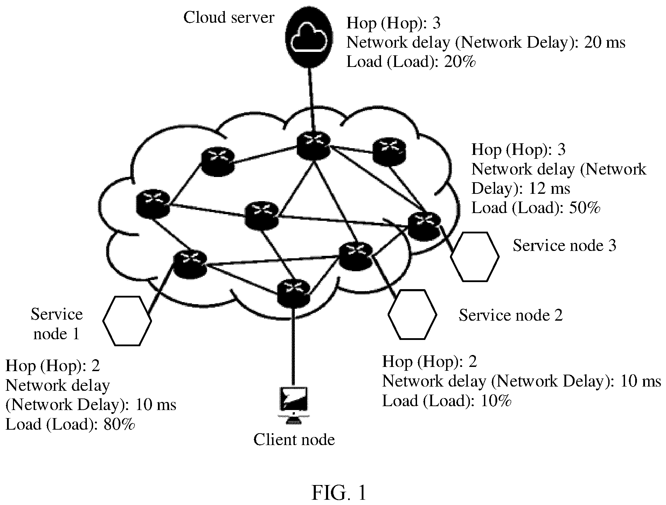

As shown in FIG. 1, a service node 1, a service node 2, and a service node 3 all provide a service A. An edge 2 has lowest load and a lowest latency. A packet whose destination address is the service A is directed to a station, namely, the service node 2, and a forwarding flow table is established, to continuously direct service packets belonging to a same session to the service node 2. This ensures flow affinity of the service.

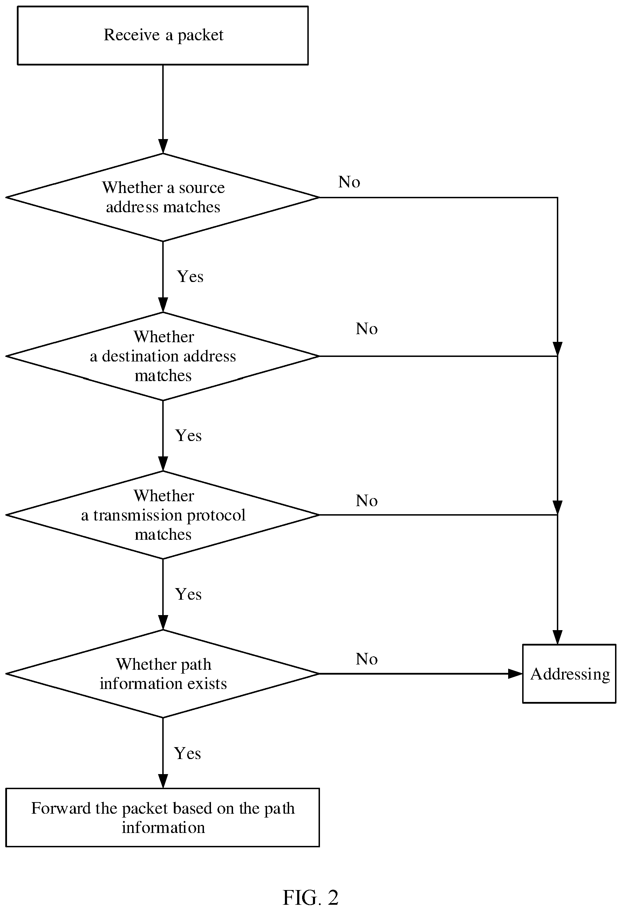

A CFN node may match 5-tuple information or 2-tuple information of the packet with a path information table, and then forward the packet based on a matching result. A matching process of the 2-tuple information may be shown in FIG. 2. After receiving the packet, the CFN node matches a source address of the packet with an SRC IP entry in the path information table. If the source address does not match the SRC IP entry, the CFN node discards the packet. If the source address successfully matches the SRC IP entry, the CFN node matches the destination address of the packet with an SERV ID entry in a session flow table that successfully matches the source address. If the destination address does not match the SERV ID entry, the CFN node discards the packet. If the destination address successfully matches the SERV ID entry, the CFN node matches transmission protocol information of the packet with a protocol entry in the session flow table that successfully matches the destination address. If the transmission protocol information does not match the protocol entry, the CFN node discards the packet. If the transmission protocol information successfully matches the protocol entry, the CFN node forwards the packet based on path information in the session flow table that successfully matches the transmission protocol information.

Emergence of edge computing and the Internet of things brings massive accessing. To forward a service packet at a line rate and maintain flow affinity for each session, the CFN router needs to create a large quantity of session flow tables, and costs of the CFN router are large.

In view of this, an embodiment of this application provides a service routing method and apparatus, to resolve a problem of large costs of a CFN router in an existing technology. The method and the apparatus are based on a same inventive idea. Because problem-resolving principles of the method are similar to those of the apparatus, implementations of the apparatus and the method may refer to each other, and no repeated description is provided.

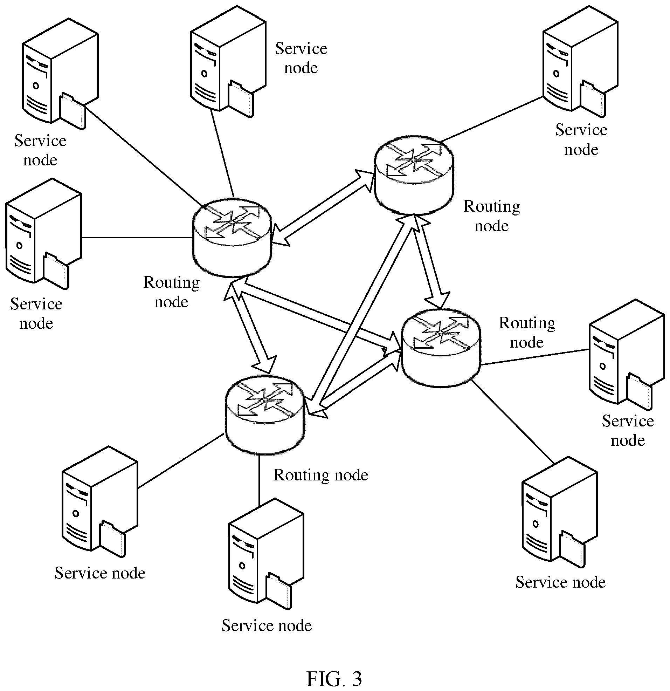

This embodiment of this application may be applied to a communications system. The communications system may include a routing node and a service node, and one routing node may be connected to one or more service nodes. The routing node may be configured to provide service routing, for example, route a service packet sent by user equipment to a service node. A service routing node that the user equipment first accesses may be referred to as a network ingress (Ingress) node, and another service routing node may be referred to as a network egress (Egress) node. The ingress node may be responsible for routing a packet sent by a user to the egress node, and the egress node may be responsible for routing the packet sent by the user to the service node. During specific implementation, the egress node may alternatively be the ingress node. The service node is a node that provides a service for the user, and may also be referred to as an edge computing node or the like. For example, FIG. 3 is a schematic diagram of a structure of a communications system. It should be understood that FIG. 3 is merely an example for description, and a quantity of service routing nodes and a quantity of service nodes included in the communications system are not specifically limited.

The following describes the embodiments of this application in detail with reference to the accompanying drawings.

In this application, an apparatus for bearing a computing service is designed. The apparatus may be referred to as a session maintaining apparatus (e.g. virtual computing first network, vCFN). The session maintaining apparatus may maintain a path information table, path information of one or more sessions is recorded in the path information table, and the path information may include service node address information, routing node address information, and service identifier information.

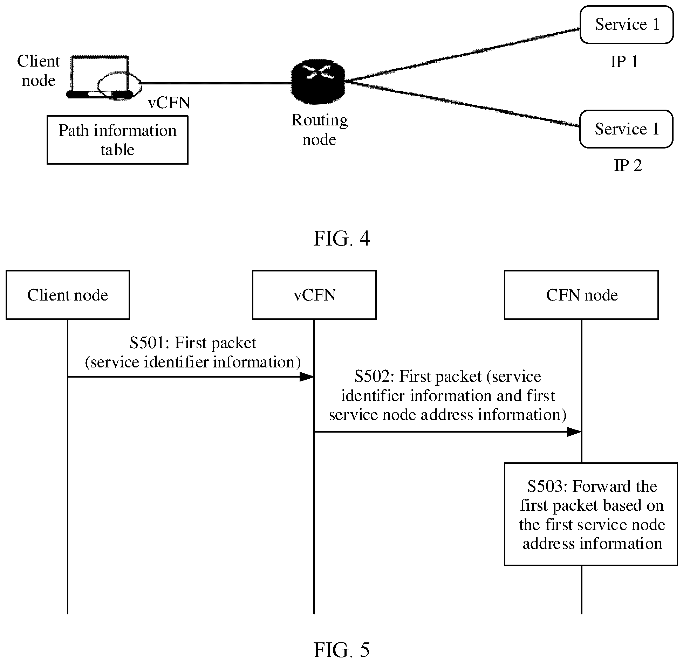

The vCFN may be deployed in front of a computing routing node. For example, the vCFN may be deployed on a client node, for example, a personal computer (personal computer, PC), a mobile phone, a tablet, a laptop computer, a palmtop computer, a mobile Internet device (mobile internet device, MID), or a wearable device such as a smart watch, a smart band, or a pedometer. Alternatively, the vCFN may be deployed at any physical location between a client node and a routing node, for example, a broadband remote access server (broadband remote access server, BRAS), a user plane function (user plane function, UPF), or even the routing node (which is physically integrated and logically isolated). The vCFN is configured to ensure flow affinity of a session, and offload the path information table from the routing node onto the vCFN, to reduce load on the routing node. For example, as shown in FIG. 4, for ease of description, in the following, the apparatus for bearing the computing service is referred to as a vCFN, and the routing node is referred to as a CFN node. It should be understood that the vCFN and the CFN node are merely example names, and may alternatively be other names during specific implementation. Any node that can bear a computing service may be understood as the vCFN in the embodiments of this application. Any node that can implement service routing may be understood as the routing node in the embodiments of this application.

For a service that needs to maintain flow affinity of a session, that is, packets of a same service need to be directed to a same service node, the vCFN may establish and maintain a path information table. The path information table records a mapping relationship between one or more service sessions and path information, to maintain service affinity. As shown in Table 3, the path information table supports a plurality of types such as 2-tuple and 5-tuple.

**Table 3**

| Path information identifier | SERV ID | SRC IP | SRC PORT | SERV PORT | Protocol | PATH INFO | TTL |
|---|---|---|---|---|---|---|---|
| E1 | Service A | UE | 3276 | 8060 | TCP | CFN ID: Service IP 1: Service A | 12s |
| E2 | Service A | UE | 3547 | 8060 | TCP | CFN ID: Service IP 2: Service A | 1s |
| E3 | Service A | UE | 7638 | 8060 | TCP | CFN ID: Service IP 1: Service A | 6s |
| E4 | Service B | UE | * | * | * | CFN ID: Service IP 2: Service B | 30s |

TTL is a value of time to live (time to live).

As shown in FIG. 5, an embodiment of this application provides a service routing method. The method may be applied to the communications system shown in FIG. 4. The method specifically includes the following steps.

S501: A vCFN obtains a first packet, where the first packet carries service identifier information, and the service identifier information is used to indicate an identifier of a first service provided by at least two service nodes. One or more nodes may provide the first service, and the first service corresponds to an identifier.

For example, the service identifier information may be a service ID of the service, code of a service ID of the service, an index of a service ID of the service, or the like. The following is described by using an example in which the service identifier information is a service ID.

In an implementation, the vCFN may be deployed on a client node, and the first packet may be obtained by the vCFN from the client node.

In another implementation, the vCFN may be deployed outside a client node, and the first packet may be sent by the client node to the vCFN.

S502: The vCFN adds first service node address information to the first packet, and sends the first packet to a CFN node, where the first service node address information is used to indicate an address of a first service node, and the at least two service nodes may include the first service node. Correspondingly, the CFN node receives the first packet.

Optionally, the vCFN may add path information to the first packet, where the path information may at least include the first service node address information.

For example, the first service node address information may be a service IP of the first service node, code of a service IP of the first service node, an index of a service IP of the first service node, or the like.

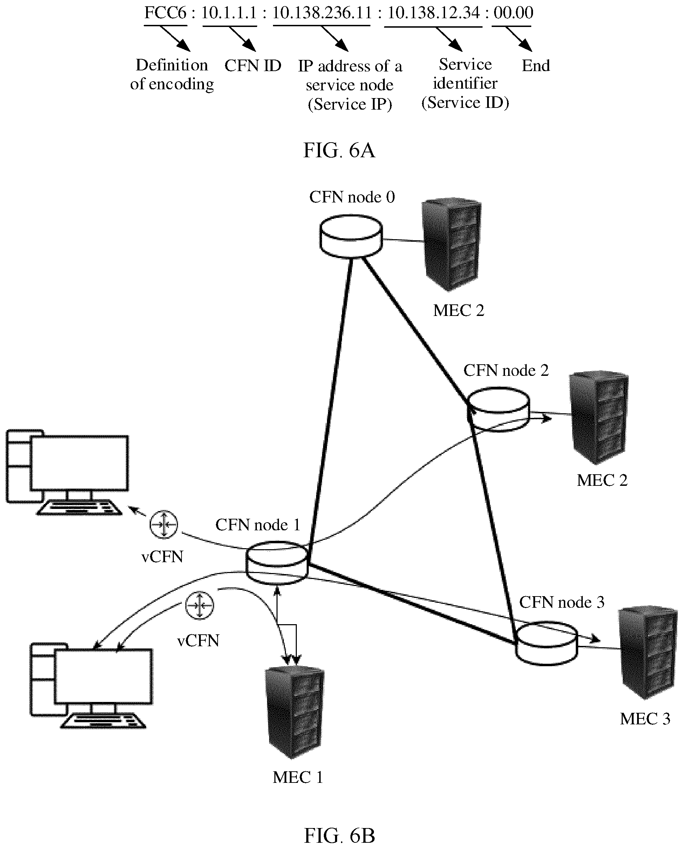

For example, for the code of the service IP, the path information (PATH INFO) = CFN ID -> Service IP -> Service ID may be encoded to generate a destination path key (Destination Path Key) = a definition of encoding -> CFN ID -> Service IP -> Service ID. For example, the encoding may be defined as FCC6: 4-byte code (EG: FCC6: 00000001), or FCC4: 2-byte code (EG: FCC4: 0001). As shown in FIG. 6A, an example in which encoding is defined as a destination path key of FCC6 is used.

In an implementation, the vCFN may be deployed on the client node, and S502 may be performed by the client node. Specifically, S402 may be performed by a vCFN function module of the client node. For example, the first packet obtained by the vCFN function module from the client node may carry the service ID. The vCFN function module searches for the corresponding first service node address information based on multi-tuple information (for example, 2-tuple information, 3-tuple information, 4-tuple information, and 5-tuple information) of the first packet, adds the service node address information to the first packet based on the first service node address information, and sends the first packet to the CFN node.

In another implementation, the vCFN may be deployed outside the client node, and S402 may be performed by the vCFN. For example, the client node may transmit the first packet to the vCFN, and the transmitted first packet may carry the service ID. The vCFN searches for the corresponding first service node address information based on multi-tuple information (for example, 2-tuple information, 3-tuple information, 4-tuple information, and 5-tuple information) of the first packet, adds the service node address information to the first packet based on the first service node address information, and forwards the first packet to the CFN node.

The 2-tuple information is used as an example. The vCFN may search a path information table for the first service node address information based on a source address and the service identifier information that are carried in the first packet. Further, the vCFN may search the path information table for corresponding path information based on the source address and the service identifier information that are carried in the first packet, and then obtain the first service node address information from the path information that is found. A specific process of searching for the path information is similar to that in FIG. 2, and similar parts are not described again.

For example, the vCFN may add the first service node address information to an SRv6 header of the first packet. Alternatively, the vCFN may add the first service node address information to a destination address field of the first packet. Alternatively, the vCFN may add the first service node address information to an IP extension field of the first packet.

Further, the vCFN may also add routing node identifier information to the first packet. It may also be understood that the path information may further include the routing node identifier information. The routing node identifier information is used to indicate a common identifier (CFN ID) of a plurality of CFN nodes. For example, the plurality of CFN nodes may correspond to a same IP address, and the CFN ID may be the IP address. Correspondingly, the first packet received by the CFN node may further include the routing node identifier information.

Optionally, the routing node identifier information may be a common identifier of some specific routing nodes, and the routing nodes may have functions such as rerouting and monitoring a status of a service node. The routing node identifier information is added to the first packet, so that the first packet may pass through a specific routing node. Therefore, when detecting that the first service node is unavailable, the routing node may switch the first packet to another available service node in time. This can improve session reliability.

For example, the routing node identifier information may be the CFN ID, code of the CFN ID, or an index of the CFN ID.

S503: The CFN node forwards the first packet based on the first service node address information.

In an implementation, the first service node is available, and the CFN node forwards the first packet to the first service node.

In another implementation, the first service node is unavailable, and the CFN node forwards the first packet based on the service identifier information.

Further, the CFN node may perform addressing based on the service identifier information. For example, the CFN node may address a next hop based on a CFN RIB, where the next hop is an egress node; and forward the first packet to the egress node. The egress node further performs addressing based on the CFN RIB, determines a second service node, and forwards the first packet to the second service node. The at least two service nodes may further include the second service node. The egress node and the CFN node may be two different CFN nodes. Alternatively, the egress node and the CFN node may be a same CFN node. In this case, the CFN node may determine the second service node through addressing based on the CFN RIB, and forward the first packet.

When the first service node is unavailable, a new service node (namely, the second service node), the CFN node, or the vCFN may end a currently unavailable service, for example, initiate connection reset (TCP Reset), to notify the client node to re-initiate a TCP connection. Therefore, the client node can be quickly reconnected to a service.

In some embodiments, the CFN node may determine, based on a filtering list, whether the first service node is available, where the filtering list is used to indicate that one or more service nodes are unavailable. The service node being unavailable may mean that the service node is overloaded or faulty, or a packet is unreachable. The packet being unreachable may mean that the packet cannot reach the service node due to network congestion or the like. For example, the CFN node may match the service identifier information and the service node address information that are carried in the first packet with the filtering list. If the service identifier information and the service node address information successfully match the filtering list, the CFN node may determine that the first service node is unavailable; otherwise, the CFN node may determine that the first service node is available.

Before determining, based on the filtering list, whether the first service node is available, the CFN node may record filtering information of the first service node in the filtering list, where the filtering information is used to indicate that the first service node is unavailable.

In an implementation, when determining that the first service node is unavailable, the CFN node may update the filtering information to the filtering list. Further, the CFN node may further broadcast the filtering information.

In another implementation, the CFN node may alternatively receive the filtering information broadcast by another CFN node, to update the filtering information to the filtering list.

The following is described by using an example in which the service ID is a service A. As shown in FIG. 6B, because a MEC 0 node is unavailable, a CFN node 0 to a CFN node 3 add filtering information indicating that the MEC 0 node is unavailable to filter lists stored in the CFN node 0 to the CFN node 3, and a packet of the service A is directed to another service node, for example, a MEC 1, a MEC 2, or a MEC 3. The MEC node is a service node.

In an implementation, when the first service node is unavailable and is switched to the second service node, the second service node or the routing node may send a fourth packet to the vCFN. The fourth packet may carry new path information, and the new path information includes second service node address information that is used to indicate an address of the second service node. Correspondingly, the vCFN may receive the fourth packet. The vCFN may match and compare the path information in the fourth packet with the established path information. If the path information in the fourth packet and the established path information are inconsistent, the vCFN updates a mapping relationship between a session and the path information.

For example, a process in which the vCFN obtains the first service node address information may be:
A1: The CFN node obtains the first service node address information.

The CFN node may obtain the path information in any of the following manners:
Manner 1: The CFN node is both a CFN ingress node and a CFN egress node. Therefore, after the first service node is located through addressing, the CFN node may determine the first service node address information. Optionally, after the first service node is located through addressing, the CFN node may determine the path information. The path information includes the first service node address information, the routing node identifier information, the service identifier information, and the like.
Manner 2: The CFN node is a CFN ingress node, and the CFN egress node is another CFN node. In this case, the CFN node may obtain the first service node address information from the CFN egress node. Optionally, the CFN node may obtain the path information from the CFN egress node. The path information includes the first service node address information, the routing node identifier information, the service identifier information, and the like.

A2: The CFN node sends a third packet to the vCFN. The third packet carries the first service node address information.

A3: After receiving the third packet, the vCFN obtains the first service node address information, and records the first service node address information in the path information table.

Optionally, after receiving the third packet, the vCFN obtains the path information including the first service node address information, and records the path information in the path information table.

Further, that the CFN node obtains the first service node address information in step A1 may be triggered by the first packet of the client node, where the first packet may be a packet that does not correspond to the first service node address information in the path information table. A process in which the first packet is used for triggering may be as follows:
K1: The vCFN receives a second packet transmitted by an application program of the client node, where the second packet carries the service identifier information.

In addition, the second packet may further carry request information used to request the first service node address information.

For example, an IP extension field or a destination address field of the second packet may carry the request information, and the request information is service node address information that is set to a preset value.

K2: The vCFN determines that the path information table does not include service node address information of the second packet.

K3: The vCFN forwards the second packet to the CFN node (CFN Ingress), and the CFN node locates a next hop through addressing based on the CFN RIB, where the next hop is a CFN egress node (CFN Egress) until the first service node is found, and the CFN ingress node and the CFN egress node may be a same node, or may be different nodes.

In an implementation, the vCFN may transparently transmit the second packet to the CFN ingress node.

In another implementation, the vCFN may alternatively add the request information used to request the path information to the second packet, and forward the second packet to the CFN ingress node.

That the CFN node obtains the first service node address information in step A1 may alternatively be triggered by a service node. For example, during switching from another service node to the first service node, the CFN node obtains the first service node address information and sends the first service node address information to the vCFN.

For another example, a process in which the vCFN obtains the first service node address information may alternatively be:
P1: The first service node sends the third packet to the vCFN. The third packet carries the first service node address information.

For example, the service node may add the first service node address information to an SRv6 header of the third packet; add the first service node address information to an IP extension field of the third packet; or add the first service node address information to a destination address field of the third packet.

In addition, the service node may further add the routing node identifier information to the third packet.

P2: After receiving the third packet, the vCFN obtains the first service node address information, and records the first service node address information in the path information table.

Further, that the first service node sends the first service node address information to vCFN in step P1 may be triggered by the first packet of the client node. For a process in which the first packet is used for triggering, refer to K1 to K3.

That the first service node sends the first service node address information to vCFN in step P1 may alternatively be triggered by the service node. For example, during switching from another service node to the first service node, the first service node sends the first service node address information to the vCFN.

To better understand the service routing method provided in the embodiments of this application, the following specifically describes a packet routing process with reference to a specific format of a packet. For ease of description, an information set including the service node address information, the routing node identifier information, and the service identifier information is referred to as path information in the following. Embodiment 1: The path information is carried in an SRv6 header of a packet.

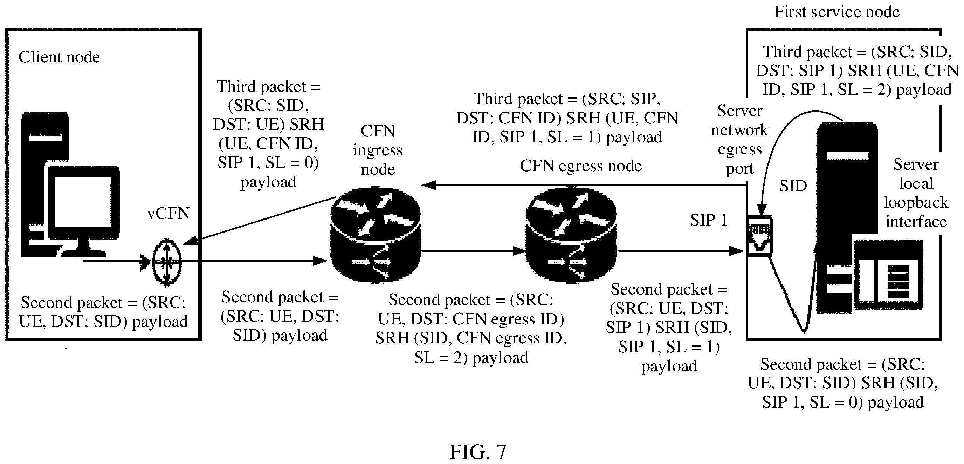

FIG. 7 shows a process in which the vCFN obtains the path information by using the first packet and a response packet of the first packet.

B1: A format of the second packet sent by the client node may be second packet = (SRC: UE, DST: SID) payload.

B2: The vCFN transparently transmits the second packet to the CFN ingress node.

B3: The CFN ingress node locates the CFN egress node through addressing, and forwards the second packet to the CFN egress node, where the format of the second packet forwarded by the CFN ingress node may be second packet = (SRC: UE, DST: CFN Egress) SRH (SID, CFN Egress, SL = 2) payload.

B4: The CFN egress node locates the first service node through addressing, and forwards the second packet to a server network port of the first service node, where the format of the second packet forwarded by the CFN egress node may be second packet = (SRC: UE, DST: SIP 1) SRH (SID, SIP 1, SL = 1) payload.

After performing addressing based on the second packet, the CFN ingress node and the CFN egress node may forward the second packet to the first service node through segment routing (segment routing, SR)/source routing or a tunnel.

B5: The server network port of the first service node forwards the second packet to a server local loopback (loopback) interface of the first service node, where the format of the second packet forwarded by the first service node may be second packet = (SRC: UE, DST: SID) SRH (SID, SIP 1, SL = 0) payload.

In the format of the packet, SRC indicates a source address, DST indicates a destination address, payload is data, SRH () is an SRv6 header, SID indicates a service ID of a target service, SIP 1 indicates a service IP of the first service node, CFN Egress indicates an IP address of the CFN egress node, and SL indicates a quantity of routing hops.

B6: The server loopback interface of the first service node sends the third packet to the server network port of the first service node, where a format of the third packet sent by the server loopback interface of the first service node may be third packet = (SRC: SID, DST: SIP 1) SRH (UE, CFN ID, SIP 1, SL = 2) payload.

B7: After receiving the third packet, the server network port of the first service node forwards the third packet to the CFN ingress node, where the format of the third packet forwarded by the first service node may be third packet = (SRC: SIP, DST: CFN ID) SRH (UE, CFN ID, SIP 1, SL = 1) payload.

B8: After receiving the third packet forwarded by the server network port of the first service node, the CFN node forwards the third packet to the vCFN, where the format of the third packet forwarded by the CFN node may be third packet = (SRC: SID, DST: UE) SRH (UE, CFN ID, SIP 1, SL = 0) payload.

B10: After receiving the third packet forwarded by the CFN node, the vCFN obtains the path information, and records the path information in the path information table.

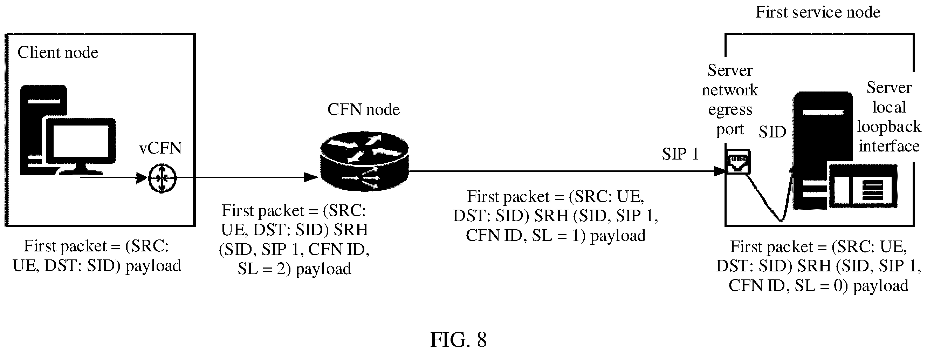

FIG. 8 shows a process in which the client node sends a subsequent packet. The subsequent packet may be a packet whose corresponding path information is included in the path information table of the vCFN, for example, the foregoing first packet.

C1: The client node sends the first packet to the vCFN, where a format of the first packet sent by the client node may be first packet = (SRC: UE, DST: SID) payload.

C2: The vCFN adds the path information to the SRv6 header of the first packet, and then forwards the first packet to the CFN node, where a format of the first packet forwarded by the vCFN may be first packet = (SRC: UE, DST: SID) SRH (SID, SIP 1, CFN ID, SL = 2) payload.

C3: After receiving the first packet carrying the path information, the CFN node adjusts the quantity of routing hops and sends an adjusted first packet to the server network port of the first service node, where a format of the first packet sent by the CFN node may be first packet = (SRC: UE, DST: SID) SRH (SID, SIP 1, CFN ID, SL = 1) payload.

C4: After receiving the first packet, the server network port of the first service node further adjusts the quantity of routing hops and sends a first packet to the server loopback interface of the first service node, where a format of the first packet sent by the first service node may be first packet = (SRC: UE, DST: SID) SRH (SID, SIP 1, CFN ID, SL = 0) payload.

In the format of the packet, CFN ID is a common identifier of a plurality of routing nodes.

The third packet is used as an example. For a process in which the service node sends the packet, refer to step B6 to step B10.

In step B10, if the vCFN determines that the path information carried in the packet from the service node is inconsistent with the path information recorded in the path information table, the vCFN updates the path information table based on the path information carried in the packet. For example, during switching from the first service node to the second service node, and after receiving the fourth packet sent by the second service node, the vCFN updates the path information table based on the path information carried in the fourth packet.

Embodiment 2: The path information is carried in an IP protocol extension field or a destination address field of a packet.

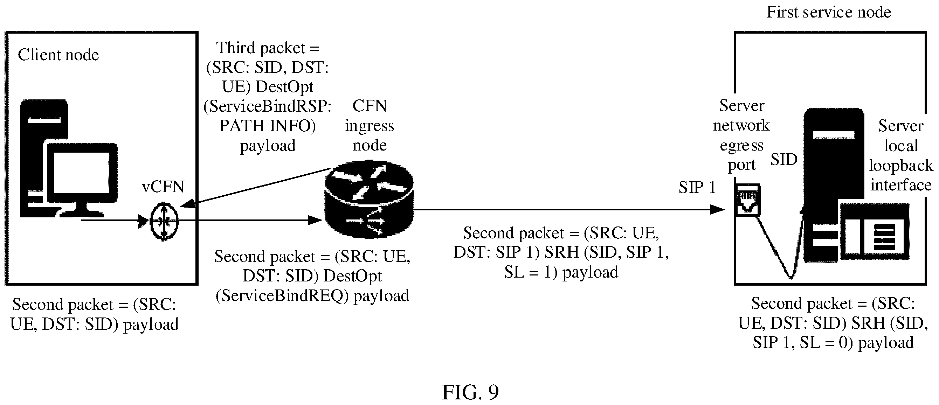

For example, FIG. 9 shows a process in which the vCFN obtains the path information by using the first packet and the response packet of the first packet.

D1: The client node sends the second packet to the vCFN. A format of the second packet sent by the client node may be second packet = (SRC: UE, DST: SID) DestOpt (ServiceBindREQ) payload.

D2: The vCFN adds the request information used to request the path information to the second packet, and forwards the second packet to the CFN node. A format of the second packet forwarded by the vCFN may be second packet = (SRC: UE, DST: SID) DestOpt (ServiceBindREQ) payload. DestOpt is an IP option field of the packet. When DestOpt is ServiceBindREQ, DestOpt is used to request the path information.

D3: The CFN node locates the first service node through addressing.

It should be understood that a case in which the CFN ingress node and the CFN egress node are a same node is described in step D3. When the CFN ingress node and the CFN egress node are different nodes, a process in which the CFN ingress node performs addressing is similar to that in step B3 and step B4.

D4: The CFN node forwards the second packet to the server network port of the first service node, where the format of the second packet forwarded by the CFN node may be second packet = (SRC: UE, DST: SIP 1) SRH (SID, SIP 1, SL = 1) payload.

D5: The server network port of the first service node forwards the second packet to the server loopback interface of the first service node, where the format of the second packet forwarded by the first service node may be second packet = (SRC: UE, DST: SID) SRH (SID, SIP 1, SL = 0) payload.

D6: The CFN node sends the third packet to the vCFN, where the third packet carries the path information. A format of the third packet sent by the CFN node may be third packet = (SRC: SID, DST: UE) DestOpt (ServiceBindRSP: PATH INFO) payload.

Step D6 and step D4 are not performed in a strict sequence. D4 may be performed first and then D6 may be performed, D6 may be performed first and then D4 may be performed, or D4 and D6 may be performed simultaneously.

In an implementation, during switching from the first service node to the second service node, the CFN node may send, to the vCFN, a packet carrying new path information, so that the vCFN may update the path information table based on the new path information. For a specific process, refer to step D6.

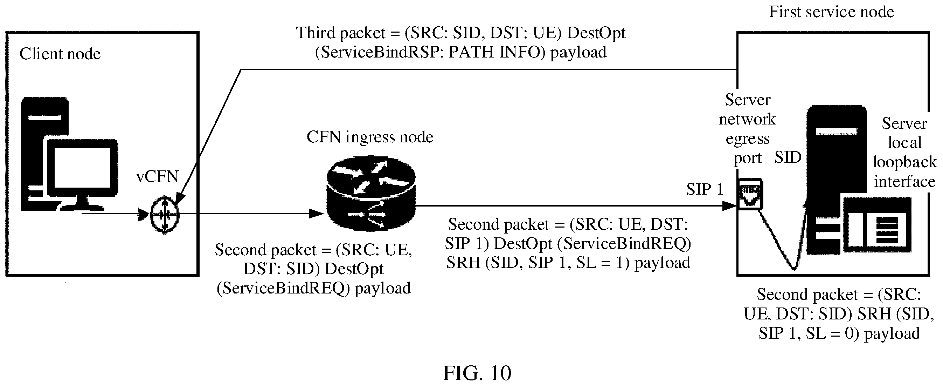

For another example, FIG. 10 shows a process in which the vCFN obtains the path information by using the first packet and the response packet of the first packet.

F1: The client node sends the second packet to the vCFN. A format of the second packet sent by the client node may be second packet = (SRC: UE, DST: SID) DestOpt (ServiceBindREQ) payload.

F2: The vCFN adds the request information used to request the path information to the second packet, and forwards the second packet to the CFN node. A format of the second packet forwarded by the vCFN may be second packet = (SRC: UE, DST: SID) DestOpt (ServiceBindREQ) payload.

F3: The CFN node locates the first service node through addressing.

It should be understood that a case in which the CFN ingress node and the CFN egress node are a same node is described in step E3. When the CFN ingress node and the CFN egress node are different nodes, a process in which the CFN ingress node performs addressing is similar to that in step B3 and step B4.

F4: The CFN node forwards the second packet to the server network port of the first service node, where the format of the second packet forwarded by the CFN node may be second packet = (SRC: UE, DST: SIP 1) DestOpt (ServiceBindREQ) SRH (SID, SIP 1, SL = 1) payload.

F5: The server network port of the first service node forwards the second packet to the server loopback interface of the first service node, where the format of the second packet forwarded by the first service node may be second packet = (SRC: UE, DST: SID) DestOpt (ServiceBindREQ) SRH (SID, SIP 1, SL = 0) payload.

F6: The server network port of the first service node sends the third packet to the vCFN, where the third packet carries the path information. A format of the third packet sent by the first service node may be third packet = (SRC: SID, DST: UE) DestOpt (ServiceBindRSP: PATH INFO) payload.

In an implementation, during switching from the first service node to the second service node, the second service node may send, to the vCFN, a packet carrying new path information, so that the vCFN may update the path information table based on the new path information. For a specific process, refer to step F6.

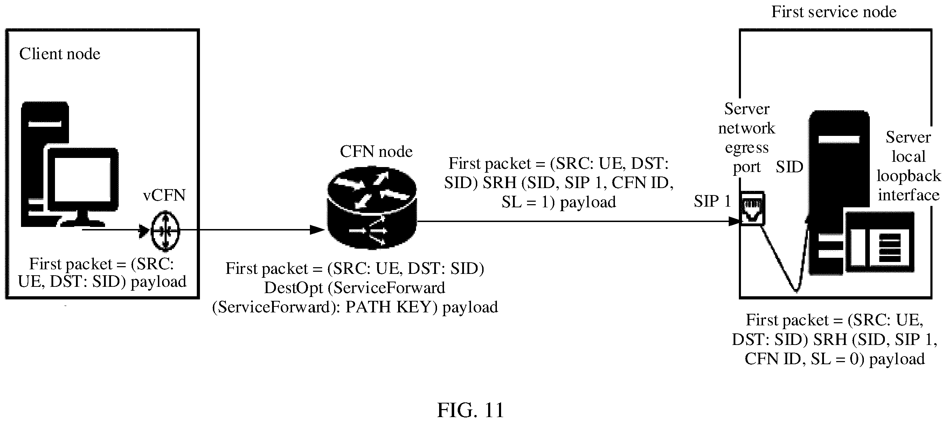

The first packet is used as an example. A process in which the client node sends a subsequent packet to the first service node may be shown in FIG. 11.

E1: The client node sends the first packet to the vCFN, where a format of the first packet sent by the client node may be first packet = (SRC: UE, DST: SID) payload.

E2: The vCFN adds the path information to the first packet and forwards the first packet to the CFN node. When the path information is carried in an IP option field, a format of the first packet forwarded by the vCFN may be first packet = (SRC: UE, DST: SID) DestOpt (ServiceForward: PATH KEY) payload. When DestOpt is ServiceForward, DestOpt is used to request for fforwarding the packet based on the path key. When the path information is carried in a destination address field, a format of the first packet forwarded by the vCFN may be first packet = (SRC: UE, DST: PATH KEY) payload. PATH KEY may be code of (SID, SIP 1, CFN ID, SL = 2).

E3: After receiving the first packet carrying the path information, the CFN node decodes the first packet to obtain the path information, adjusts the quantity of routing hops, and sends an adjusted first packet to the server network port of the first service node, where a format of the first packet sent by the CFN node may be first packet = (SRC: UE, DST: SID) SRH (SID, SIP 1, CFN ID, SL = 1) payload.

E4: After receiving the first packet, the server network port of the first service node further adjusts the quantity of routing hops and sends a first packet to the server loopback interface of the first service node, where a format of the first packet sent by the server network port of the first service node may be first packet = (SRC: UE, DST: SID) SRH (SID, SIP 1, CFN ID, SL = 0) payload.

Embodiment 3: A destination address is encoded to carry the path information.

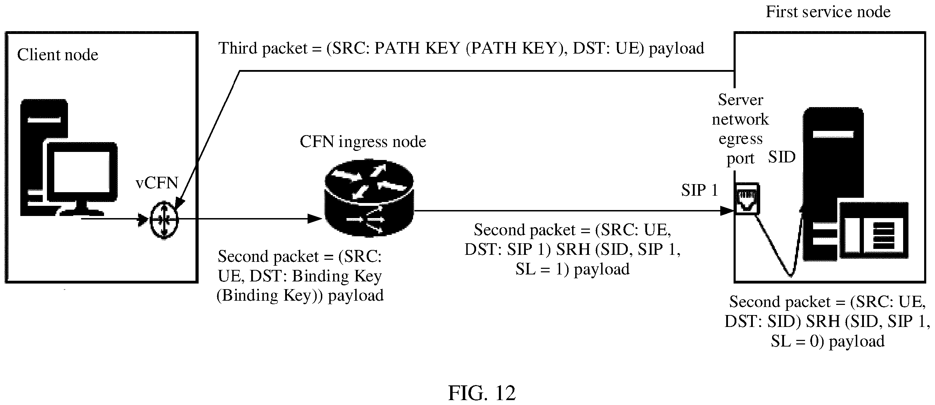

FIG. 12 shows a process in which the vCFN obtains the path information by using the first packet and the response packet of the first packet.

G1: A format of the second packet sent by the client node may be second packet = (SRC: UE, DST: SID) payload.

G2: The vCFN encodes a destination address of the second packet and then forwards a second packet to the routing node. A manner of encoding the destination address of the second packet may be adding a CFN ID and service IP information to a destination address field. In the second packet, a service IP in the destination address field may be set to a preset value (for example, set to 0), to generate a binding key, so as to request the path information. A format of the second packet forwarded by the vCFN may be second packet = (SRC: UE, DST: Binding Key) payload.

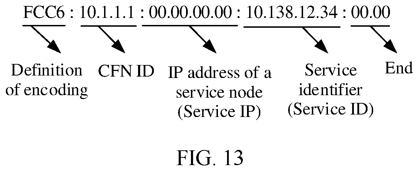

For example, Binding Key = a definition of encoding -> CFN ID -> Service IP (which is set to 0) -> Service ID. The encoding may be defined as FCC6: 4-byte code (EG: FCC6: 00000001), or FCC4: 2-byte code (EG: FCC4: 0001). As shown in FIG. 13, an example in which encoding is defined as a binding key of FCC6 is used.

G3: The CFN node locates the first service node through addressing.

It should be understood that a case in which the CFN ingress node and the CFN egress node are a same node is described in step D3. When the CFN ingress node and the CFN egress node are different nodes, a process in which the CFN ingress node performs addressing is similar to that in step B3 and step B4.

G4: The CFN node forwards the second packet to the server network port of the first service node, where the format of the second packet forwarded by the CFN node may be second packet = (SRC: UE, DST: SIP 1) SRH (SID, SIP 1, SL = 1) payload.

G5: The server network port of the first service node forwards the second packet to the server loopback interface of the first service node, where the format of the second packet forwarded by the first service node may be second packet = (SRC: UE, DST: SID) SRH (SID, SIP 1, SL = 0) payload.

G6: The first service node sends the third packet to the vCFN, where the third packet carries the path information. The format of the third packet sent by the first service node may be third packet = (SRC: PATH KEY, DST: UE) payload.

The first service node encodes a source address of the third packet. For example, a CFN ID and service IP information are added to a source address field. In the third packet, a service IP in a destination address field may be set to the service IP of the first service node, to generate a path key, so as to carry the path information.

For example, PATH KEY = a definition of encoding -> CFN ID -> Service IP (the service IP of the first service node) -> Service ID. The encoding may be defined as FCC6: 4-byte code (EG: FCC6: 00000001), or FCC4: 2-byte code (EG: FCC4: 0001).

In an implementation, during switching from the first service node to the second service node, the second service node may send, to the vCFN, a packet carrying new path information, so that the vCFN may update the path information table based on the new path information. For a specific process, refer to step G6.

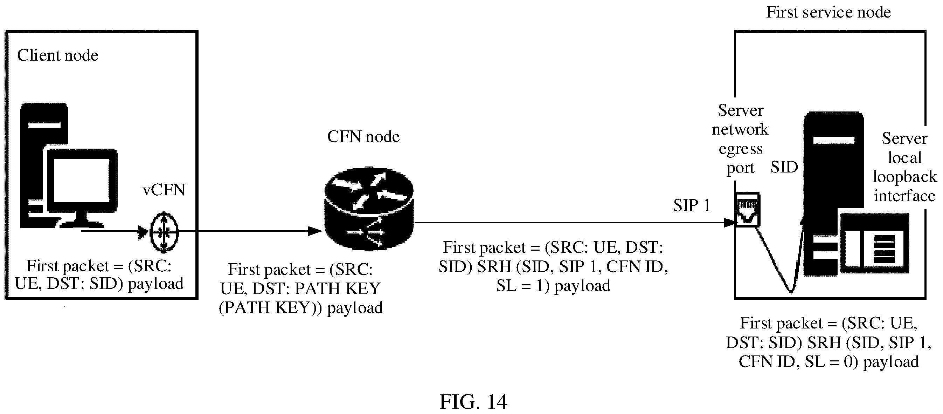

The first packet is used as an example. A process in which the client node sends a subsequent packet to the first service node may be shown in FIG. 14.

H1: The client node sends the first packet to the vCFN, where a format of the first packet sent by the client node may be first packet = (SRC: UE, DST: SID) payload.

H2: The vCFN encodes the first packet and forwards a first packet to the CFN node. A format of the first packet forwarded by the vCFN may be first packet = (SRC: UE, DST: PATH KEY) payload.

For PATH KEY, refer to related description in G6. Details are not described herein again.

H3: After receiving the first packet carrying the path information, the CFN node decodes the first packet to obtain the path information, adjusts the quantity of routing hops, and sends an adjusted first packet to the server network port of the first service node, where a format of the first packet sent by the CFN node may be first packet = (SRC: UE, DST: SID) SRH (SID, SIP 1, CFN ID, SL = 1) payload.

H4: After receiving the first packet, the server network port of the first service node further adjusts the quantity of routing hops and sends a first packet to the server loopback interface of the first service node, where a format of the first packet sent by the server network port of the first service node may be first packet = (SRC: UE, DST: SID) SRH (SID, SIP 1, CFN ID, SL = 0) payload.

In this embodiment of this application, a vCFN apparatus is introduced to record a status (for example, the path information) of a service session. The vCFN apparatus obtains the path information in an explicit or implicit manner, to establish a path mapping relationship for a service ID. Further, a subsequent packet sent by the client node may carry the path information by using the vCFN apparatus, so that the routing node may obtain the path information from the packet without saving the path information table. According to the service routing method provided in this embodiment of this application, burden of the path information table of a forwarding plane of the routing node can be reduced. In addition, the vCFN apparatus including the path information table can ensure both dynamic service routing and flow affinity of a session.

In addition, the routing node may monitor, in real time, and distribute, by using a control plane, a status and availability of the service node, to establish the filtering list, so that the service node can be quickly switched to another available service node when overload or failover occurs.

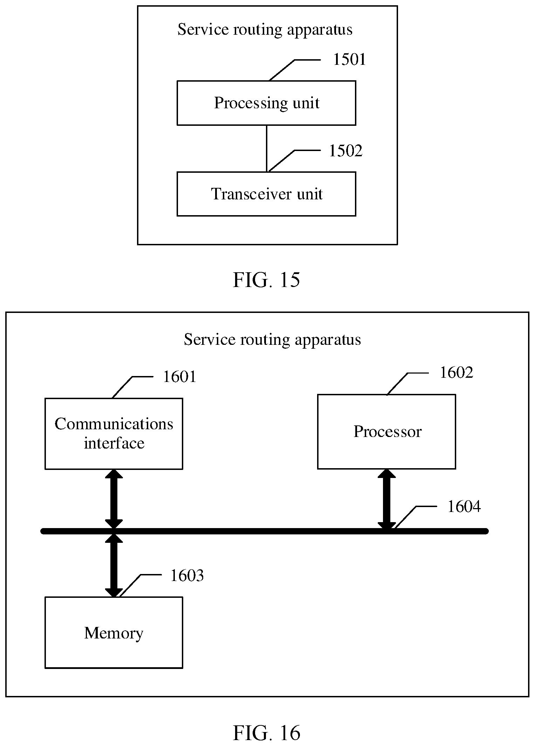

Based on a same inventive concept as the method embodiments, an embodiment of this application provides a service routing apparatus. A structure of the service routing apparatus may be shown in FIG. 15, and includes a processing unit 1501 and a transceiver unit 1502.

In an implementation, the apparatus is specifically configured to implement functions of the routing node in the embodiments in FIG. 5 to FIG. 14. The apparatus may be the routing node, a chip or a chip set in the routing node, or a part of a chip configured to perform related functions of the method. Specifically, the transceiver unit 1502 is configured to receive and send a packet. The processing unit 1501 is configured to use the transceiver unit 1502 to: receive a first packet, where the first packet carries service identifier information and first service node address information, the service identifier information is used to indicate an identifier of a first service provided by at least two service nodes, the first service node address information is used to indicate an address of a first service node, and the at least two service nodes include the first service node; and forward the first packet based on the first service node address information.

For example, the service identifier information and the first service node address information may be carried in an SRv6 header of the first packet, a destination address field of the first packet, or an IP extension field of the first packet.

In some embodiments, when forwarding the first packet based on the first service node address information, the processing unit 1501 may specifically be configured to: if the first service node is available, forward the first packet to the first service node; or if the first service node is unavailable, forward the first packet based on the service identifier information.

The processing unit 1501 is further configured to determine, based on a filtering list, whether the first service node is available, where the filtering list is used to indicate that one or more service nodes are unavailable.

The service node being unavailable may mean that the service node is overloaded or faulty, or a packet is unreachable.

Before determining, based on the filtering list, whether the first service node is available, the processing unit 1501 may further be configured to: determine that the first service node is unavailable, update filtering information to the filtering list, and broadcast the filtering information, where the filtering information is used to indicate that the first service node is unavailable.

Before determining, based on the filtering list, whether the first service node is available, the processing unit 1501 may alternatively be configured to use the transceiver unit 1502 to receive filtering information broadcast by a second routing node, where the filtering information is used to indicate that the first service node is unavailable; and update the filtering information to the filtering list.

After forwarding the first packet based on the service identifier information, the processing unit 1501 may further be configured to use the transceiver unit 1502 to send a connection reset packet to a client node, where the connection reset packet is used to trigger the client node to re-initiate a transmission control protocol TCP connection.

After forwarding the first packet based on the service identifier information, the processing unit 1501 may further be configured to: obtain second service node address information, where the second service node address information is used to indicate an address of a second service node, and the at least two service nodes include the second service node; and use the transceiver unit 1502 to send the second service node address information.

Before receiving the first packet from the client node, the processing unit 1501 may further be configured to: obtain the first service node address information; and use the transceiver unit 1502 to send a second packet, where the second packet carries the first service node address information.

Before obtaining the first service node address information, the processing unit 1501 may further be configured to use the transceiver unit 1502 to receive a third packet, where the third packet carries the service identifier information.

For example, the third packet may carry request information used to request the first service node address information.

For example, an IP extension field or a destination address field of the third packet may carry the request information, and the request information is service node address information that is set to a preset value.

In addition, the first packet may further carry routing node identifier information, and the routing node identifier information is used to indicate a common identifier of a plurality of routing nodes.

In another implementation, the apparatus is specifically configured to implement functions of the session maintaining apparatus in the embodiments in FIG. 5 to FIG. 14. The apparatus may be the session maintaining apparatus, a chip or a chip set in the session maintaining apparatus, or a part of a chip configured to perform related functions of the method. Specifically, the transceiver unit 1502 is configured to receive and send a packet. The processing unit 1501 is configured to: obtain a first packet, where the first packet carries service identifier information, and the service identifier information is used to indicate an identifier of a first service provided by at least two service nodes; and add first service node address information to the first packet, and use the transceiver unit 1502 to send the first packet to a routing node, where the first service node address information is used to indicate an address of a first service node, and the at least two service nodes include the first service node.

In some embodiments, when adding the first service node address information to the first packet, the processing unit 1501 may specifically be configured to: add the first service node address information to an SRv6 header of the first packet; add the first service node address information to a destination address field of the first packet; or add the first service node address information to an IP extension field of the first packet.

When adding the first service node address information to the first packet, the processing unit 1501 may specifically be configured to add the first service node address information and routing node identifier information to the first packet, where the routing node identifier information is used to indicate a common identifier of a plurality of routing nodes.

Before adding the first service node address information to the first packet, the processing unit 1501 may further be configured to search a path information table for the first service node address information based on source address information and the service identifier information that are carried in the first packet, where the path information table records a mapping relationship between one or more sessions and service node address information.

After adding the first service node address information to the first packet, and before sending the first packet to the routing node, the processing unit 1501 may further be configured to: use the transceiver unit 1502 to receive a second packet from the routing node or the service node, where the second packet carries the service identifier information and the first service node address information; and record the first service node address information in the path information table.

Before using the transceiver unit 1502 to receive the second packet from the routing node or the service node, the processing unit 1501 may further be configured to use the transceiver unit 1502 to send a third packet to the routing node, where the third packet carries the service identifier information.

The third packet may carry request information used to request the first service node address information.

For example, an IP extension field or a destination address field of the third packet may carry the request information, and the request information is service node address information that is set to a preset value.

After adding the first service node address information to the first packet, and sending the first packet to the routing node, the processing unit 1501 may further be configured to: use the transceiver unit 1502 to receive a fourth packet from the routing node or the service node, where the fourth packet carries the service identifier information and second service node address information, the second service node address information is used to indicate an address of a second service node, and the at least two service nodes include the second service node; and update the first service node address information recorded in the path information table to the second service node address information.

In another implementation, the apparatus is specifically configured to implement functions of the service node in the embodiments in FIG. 5 to FIG. 14. The apparatus may be the service node, a chip or a chip set in the service node, or a part of a chip configured to perform related functions of the method. Specifically, the transceiver unit 1502 is configured to receive and send a packet. The processing unit 1501 is configured to: generate a first packet, where the first packet carries service identifier information, the service identifier information is used to indicate an identifier of a first service provided by at least two service nodes, and the at least two service nodes include a service node; and add service node address information to the first packet, and use the transceiver unit 1502 to send the first packet, where the service node address information is used to indicate an address of the service node.

When adding the service node address information to the first packet, the processing unit 1501 may specifically be configured to: add the service node address information to an SRv6 header of the first packet; add the service node address information to an IP extension field of the first packet; or add the service node address information to a destination address field of the first packet.

In some embodiments, when adding the service node address information to the first packet, the processing unit 1501 may specifically be configured to:
add the service node address information and routing node identifier information to the first packet, where the routing node identifier information is used to indicate a common identifier of a plurality of routing nodes.

Before adding the service node address information to the first packet, the processing unit 1501 may further be configured to use the transceiver unit 1502 to receive a second packet, where the second packet carries the service identifier information.

The second packet may further carry request information used to request the service node address information.

For example, an IP extension field of the second packet may carry the request information. Alternatively, a destination address field of the second packet may carry the request information, and the request information is service node address information that is set to a preset value.

Division into modules in the embodiments of this application is an example, is merely logical function division, and may be another division manner during actual implementation. In addition, function modules in the embodiments of this application may be integrated into one processor, or may exist alone physically, or two or more modules are integrated into one module. The integrated module may be implemented in a form of hardware, or may be implemented in a form of a software functional module.

When the integrated module may be implemented in a form of hardware, the service routing apparatus may be shown in FIG. 16, and the processing unit 1501 may be a processor 1602. The processor 1602 may be a central processing unit (central processing unit, CPU), a digital processing module, or the like. The transceiver unit 1502 may be a communications interface 1601, and the communications interface 1601 may be a transceiver, an interface circuit such as a transceiver circuit, a transceiver chip, or the like. The service routing apparatus may further include a memory 1603, configured to store a program executed by the processor 1602. The memory 1603 may be a non-volatile memory, a hard disk drive (hard disk drive, HDD) or a solid-state drive (solid-state drive, SSD), or may be a volatile memory (volatile memory), for example, a random access memory (random access memory, RAM). The memory 1603 is any other medium that can be used to carry or store expected program code in a form of an instruction or a data structure and that can be accessed by a computer. However, this is not limited thereto.

The processor 1602 is configured to execute the program code stored in the memory 1603, and is specifically configured to execute an action of the processing unit 1501. Details are not described again in this application.

In this embodiment of this application, a specific connection medium between the communications interface 1601, the processor 1602, and the memory 1603 is not limited. In this embodiment of this application, the memory 1603, the processor 1602, and the communications interface 1601 are connected through a bus 1604 in FIG. 16, and the bus is represented by a thick line in FIG. 16. A connection manner between other components is only schematically described, and is not limited thereto. The bus may be classified into an address bus, a data bus, a control bus, and the like. For ease of representation, only one thick line is used to represent the bus in FIG. 16, but this does not mean that there is only one bus or only one type of bus.

A person skilled in the art should understand that the embodiments of this application may be provided as a method, a system, or a computer program product. Therefore, this application may use a form of a hardware-only embodiment, a software-only embodiment, or an embodiment with a combination of software and hardware. Moreover, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

## Claims

1. A service routing method, comprising:
receiving (S502), by a first routing node, a first packet, wherein the first packet carries service identifier information and first service node address information, the service identifier information is used to indicate an identifier of a first service provided by at least two service nodes, the first service node address information is used to indicate an address of a first service node, and the at least two service nodes comprise the first service node; and
forwarding (S503), by the first routing node, the first packet based on the first service node address information.

2. The method according to claim 1, wherein the forwarding, by the first routing node, the first packet based on the first service node address information comprises:
if the first service node is available, forwarding, by the first routing node, the first packet to the first service node; or
if the first service node is unavailable, forwarding, by the first routing node, the first packet based on the service identifier information.

3. The method according to claim 2, wherein the method further comprises:
determining, by the first routing node based on a filtering list, whether the first service node is available, wherein the filtering list is used to indicate that one or more service nodes are unavailable.

4. The method according to claim 2 or 3, wherein after the forwarding, by the first routing node, the first packet based on the service identifier information, the method further comprises:
sending, by the first routing node, a connection reset packet to a client node, wherein the connection reset packet is used to trigger the client node to re-initiate a transmission control protocol TCP connection.

5. The method according to any one of claims 2 to 4, wherein after the forwarding, by the first routing node, the first packet based on the service identifier information, the method further comprises:
obtaining, by the first routing node, second service node address information, wherein the second service node address information is used to indicate an address of a second service node, and the at least two service nodes comprise the second service node; and
sending, by the first routing node, the second service node address information.

6. The method according to any one of claims 1 to 5, wherein before the first routing node receives the first packet from the client node, the method further comprises:
obtaining, by the first routing node, the first service node address information; and
sending, by the first routing node, a second packet, wherein the second packet carries the first service node address information.

7. The method according to claim 6, wherein before the obtaining, by the first routing node, the first service node address information, the method comprises:
receiving, by the first routing node, a third packet, wherein the third packet carries the service identifier information.

8. The method according to any one of claims 1 to 7, wherein the first packet carries routing node identifier information, and the routing node identifier information is used to indicate a common identifier of a plurality of routing nodes.

9. A service routing apparatus, comprising:
a transceiver unit (1502), configured to receive and send a packet; and
a processing unit (1501), configured to use the transceiver unit to:
receive a first packet, wherein the first packet carries service identifier information and first service node address information, the service identifier information is used to indicate an identifier of a first service provided by at least two service nodes, the first service node address information is used to indicate an address of a first service node, and the at least two service nodes comprise the first service node; and
forward the first packet based on the first service node address information.

10. The apparatus according to claim 9, wherein when forwarding the first packet based on the first service node address information, the processing unit is specifically configured to:
if the first service node is available, forward the first packet to the first service node; or
if the first service node is unavailable, forward the first packet based on the service identifier information.

11. The apparatus according to claim 10, wherein the processing unit is further configured to:
determine, based on a filtering list, whether the first service node is available, wherein the filtering list is used to indicate that one or more service nodes are unavailable.

12. The apparatus according to claim 10 or 11, wherein after forwarding the first packet based on the service identifier information, the processing unit is further configured to:
use the transceiver unit to send a connection reset packet to a client node, wherein the connection reset packet is used to trigger the client node to re-initiate a transmission control protocol TCP connection.

13. The apparatus according to any one of claims 10 to 12, wherein after forwarding the first packet based on the service identifier information, the processing unit is further configured to:
obtain second service node address information, wherein the second service node address information is used to indicate an address of a second service node, and the at least two service nodes comprise the second service node; and
use the transceiver unit to send the second service node address information.

14. The apparatus according to any one of claims 9 to 13, wherein before receiving the first packet from the client node, the processing unit is further configured to:
obtain the first service node address information; and
use the transceiver unit to send a second packet, wherein the second packet carries the first service node address information.

15. The apparatus according to claim 14, wherein before obtaining the first service node address information, the processing unit is further configured to:
use the transceiver unit to receive a third packet, wherein the third packet carries the service identifier information.

## Patentansprüche

1. Dienst-Routingverfahren, umfassend:
Empfangen (S502) eines ersten Pakets durch einen ersten Routingknoten, wobei das erste Paket Dienstkennungsinformationen und erste Dienstknoten-Adresseninformationen führt, die Dienstkennungsinformationen verwendet werden, um eine Kennung eines durch mindestens zwei Dienstknoten bereitgestellten ersten Dienstes anzugeben, die ersten Dienstknoten-Adresseninformationen verwendet werden, um eine Adresse eines ersten Dienstknotens anzugeben, und die mindestens zwei Dienstknoten den ersten Dienstknoten umfassen; und
Weiterleiten (S503) des ersten Pakets durch den ersten Routingknoten auf der Basis der ersten Dienstknoten-Adresseninformationen.

2. Verfahren nach Anspruch 1, wobei das Weiterleiten des ersten Pakets durch den ersten Routingknoten auf der Basis der ersten Dienstknoten-Adresseninformationen Folgendes umfasst:
wenn der erste Dienstknoten verfügbar ist, Weiterleiten des ersten Pakets durch den ersten Routingknoten zu dem ersten Dienstknoten; oder,
wenn der erste Dienstknoten nicht verfügbar ist, Weiterleiten des ersten Pakets durch den ersten Routingknoten auf der Basis der Dienstkennungsinformationen.

3. Verfahren nach Anspruch 2, wobei das Verfahren ferner Folgendes umfasst:
Bestimmen durch den ersten Routingknoten auf der Basis einer Filterungsliste, ob der erste Dienstknoten verfügbar ist, wobei die Filterungsliste verwendet wird, um anzugeben, dass ein oder mehrere Dienstknoten nicht verfügbar sind.

4. Verfahren nach Anspruch 2 oder 3, wobei das Verfahren nach dem Weiterleiten des ersten Pakets durch den ersten Routingknoten auf der Basis der Dienstkennungsinformationen ferner Folgendes umfasst:
Senden eines Verbindungsrücksetzpakets zu einem Client-Knoten durch den ersten Routingknoten, wobei das Verbindungsrücksetzpaket verwendet wird, um den Client-Knoten dazu zu veranlassen, eine Übertragungssteuerprotokoll- bzw. TCP-Verbindung neu einzuleiten.

5. Verfahren nach einem der Ansprüche 2 bis 4, wobei das Verfahren nach dem Weiterleiten des ersten Pakets durch den ersten Routingknoten auf der Basis Dienstkennungsinformationen ferner Folgendes umfasst:
Erhalten von zweiten Dienstknoten-Adresseninformationen durch den ersten Routingknoten, wobei die zweiten Dienstknoten-Adresseninformationen verwendet werden, um eine Adresse eines zweiten Dienstknotens anzugeben, und die mindestens zwei Dienstknoten den zweiten Dienstknoten umfassen; und
Senden der zweiten Dienstknoten-Adresseninformationen durch den ersten Routingknoten.

6. Verfahren nach einem der Ansprüche 1 bis 5, wobei das Verfahren, bevor der erste Routingknoten das erste Paket von dem Client-Knoten empfängt, ferner Folgendes umfasst:
Erhalten der ersten Dienstknoten-Adresseninformationen durch den ersten Routingknoten; und
Senden eines zweiten Pakets durch den ersten Routingknoten, wobei das zweite Paket die ersten Dienstknoten-Adresseninformationen führt.

7. Verfahren nach Anspruch 6, wobei das Verfahren vor dem Erhalten der ersten Dienstknoten-Adresseninformationen durch den ersten Routingknoten ferner Folgendes umfasst:
Empfangen eines dritten Pakets durch den ersten Routingknoten, wobei das dritte Paket die Dienstkennungsinformationen führt.

8. Verfahren nach einem der Ansprüche 1 bis 7, wobei das erste Paket Routingknoten-Kennungsinformationen führt und die Routingknoten-Kennungsinformationen verwendet werden, um eine gemeinsame Kennung mehrerer Routingknoten anzugeben.

9. Dienstroutingvorrichtung, umfassend:
eine Sendeempfängereinheit (1502), ausgelegt zum Empfangen und Senden eines Pakets; und
eine Verarbeitungseinheit (1501), ausgelegt zum Verwenden der Sendeempfängereinheit zum
Empfangen eines ersten Pakets, wobei das erste Paket Dienstkennungsinformationen und erste Dienstknoten-Adresseninformationen führt, die Dienstkennungsinformationen verwendet werden, um eine Kennung eines durch mindestens zwei Dienstknoten bereitgestellten ersten Dienstes anzugeben, die ersten Dienstknoten-Adresseninformationen verwendet werden, um eine Adresse eines ersten Dienstknotens anzugeben, und die mindestens zwei Dienstknoten den ersten Dienstknoten umfassen; und
Weiterleiten des ersten Pakets auf der Basis der ersten Dienstknoten-Adresseninformationen.

10. Vorrichtung nach Anspruch 9, wobei beim Weiterleiten des ersten Pakets auf der Basis der ersten Dienstknoten-Adresseninformationen die Verarbeitungseinheit speziell für Folgendes ausgelegt ist:
wenn der erste Dienstknoten verfügbar ist, Weiterleiten des ersten Pakets zu dem ersten Dienstknoten; oder,
wenn der erste Dienstknoten nicht verfügbar ist, Weiterleiten des ersten Pakets auf der Basis der Dienstkennungsinformationen.

11. Vorrichtung nach Anspruch 10, wobei die Verarbeitungseinheit ferner ausgelegt ist zum
Bestimmen auf der Basis einer Filterungsliste, ob der erste Dienstknoten verfügbar ist, wobei die Filterungsliste verwendet wird, um anzugeben, dass ein oder mehrere Dienstknoten nicht verfügbar sind.

12. Vorrichtung nach Anspruch 10 oder 11, wobei nach dem Weiterleiten des ersten Pakets auf der Basis der Dienstkennungsinformationen die Verarbeitungseinheit ferner ausgelegt ist zum
Verwenden der Sendeempfängereinheit zum Senden eines Verbindungsrücksetzpakets zu einem Client-Knoten, wobei das Verbindungsrücksetzpaket verwendet wird, um den Client-Knoten dazu zu veranlassen, eine Übertragungssteuerprotokoll- bzw. TCP-Verbindung neu einzuleiten.

13. Vorrichtung nach einem der Ansprüche 10 bis 12, wobei nach dem Weiterleiten des ersten Pakets auf der Basis Dienstkennungsinformationen die Verarbeitungseinheit ferner ausgelegt ist zum
Erhalten von zweiten Dienstknoten-Adresseninformationen, wobei die zweiten Dienstknoten-Adresseninformationen verwendet werden, um eine Adresse eines zweiten Dienstknotens anzugeben, und die mindestens zwei Dienstknoten den zweiten Dienstknoten umfassen; und
Verwenden der Sendeempfängereinheit zum Senden der zweiten Dienstknoten-Adresseninformationen.

14. Vorrichtung nach einem der Ansprüche 9 bis 13, wobei vor dem Empfangen des ersten Pakets von dem Client-Knoten die Verarbeitungseinheit ferner ausgelegt ist zum Erhalten der ersten Dienstknoten-Adresseninformationen; und
Verwenden der Sendeempfängereinheit zum Senden eines zweiten Pakets, wobei das zweite Paket die ersten Dienstknoten-Adresseninformationen führt.

15. Vorrichtung nach Anspruch 14, wobei vor dem Erhalten der ersten Dienstknoten-Adresseninformationen die Verarbeitungseinheit ferner ausgelegt ist zum Verwenden der Sendeempfängereinheit zum Empfangen eines dritten Pakets, wobei das dritte Paket die Dienstkennungsinformationen führt.

## Revendications

1. Procédé de routage de service, comprenant :
la réception (S502), par un premier nœud de routage, d'un premier paquet, le premier paquet véhiculant des informations d'identifiant de service et des informations d'adresse de premier nœud de service, les informations d'identifiant de service servant à indiquer un identifiant d'un premier service fourni par au moins deux nœuds de service, les informations d'adresse de premier nœud de service servant à indiquer une adresse d'un premier nœud de service, et les au moins deux nœuds de service comprenant le premier nœud de service ; et
le transfert (S503), par le premier nœud de routage, du premier paquet sur la base des informations d'adresse de premier nœud de service.

2. Procédé selon la revendication 1, le transfert, par le premier nœud de routage, du premier paquet sur la base des informations d'adresse de premier nœud de service comprenant :
si le premier nœud de service est disponible, le transfert, par le premier nœud de routage, du premier paquet vers le premier nœud de service ; ou
si le premier nœud de service n'est pas disponible, le transfert, par le premier nœud de routage, du premier paquet sur la base des informations d'identifiant de service.

3. Procédé selon la revendication 2, le procédé comprenant en outre :
la détermination, par le premier nœud de routage sur la base d'une liste de filtrage, si le premier nœud de service est ou non disponible, la liste de filtrage servant à indiquer qu'un ou plusieurs nœuds de service ne sont pas disponibles.

4. Procédé selon la revendication 2 ou 3, le procédé comprenant en outre, après le transfert, par le premier nœud de routage, du premier paquet sur la base des informations d'identifiant de service :
l'envoi, par le premier nœud de routage, d'un paquet de réinitialisation de connexion à un nœud client, le paquet de réinitialisation de connexion servant à déclencher la réinitialisation, par le nœud client, d'une connexion de protocole de contrôle de transmission, noté TCP.

5. Procédé selon l'une quelconque des revendications 2 à 4, le procédé comprenant en outre, après le transfert, par le premier nœud de routage, du premier paquet sur la base des informations d'identifiant de service :
l'obtention, par le premier nœud de routage, d'informations d'adresse de deuxième nœud de service, les informations d'adresse de deuxième nœud de service servant à indiquer une adresse d'un deuxième nœud de service, et les au moins deux nœuds de service comprenant le deuxième nœud de service ; et
l'envoi, par le premier nœud de routage, des informations d'adresse de deuxième nœud de service.

6. Procédé selon l'une quelconque des revendications 1 à 5, le procédé comprenant en outre, avant la réception, par le premier nœud de routage, du premier paquet depuis le nœud client :
l'obtention, par le premier nœud de routage, des informations d'adresse de premier nœud de service ; et
l'envoi, par le premier nœud de routage, d'un deuxième paquet, le deuxième paquet véhiculant les informations d'adresse de premier nœud de service.

7. Procédé selon la revendication 6, le procédé comprenant, avant l'obtention, par le premier nœud de routage, des informations d'adresse de premier nœud de service :
la réception, par le premier nœud de routage, d'un troisième paquet, le troisième paquet véhiculant les informations d'identifiant de service.

8. Procédé selon l'une quelconque des revendications 1 à 7, le premier paquet véhiculant des informations d'identifiant de nœud de routage, et les informations d'identifiant de nœud de routage servant à indiquer un identifiant commun d'une pluralité de nœuds de routage.

9. Appareil de routage de service, comprenant :
une unité émetteur-récepteur (1502), configurée pour recevoir et envoyer un paquet ; et
une unité de traitement (1501), configurée pour utiliser l'unité émetteur-récepteur pour :
recevoir un premier paquet, le premier paquet véhiculant des informations d'identifiant de service et des informations d'adresse de premier nœud de service, les informations d'identifiant de service servant à indiquer un identifiant d'un premier service fourni par au moins deux nœuds de service, les informations d'adresse de premier nœud de service servant à indiquer une adresse d'un premier nœud de service, et les au moins deux nœuds de service comprenant le premier nœud de service ; et
transférer le premier paquet sur la base des informations d'adresse de premier nœud de service.

10. Appareil selon la revendication 9, l'unité de traitement, lorsqu'elle transfère le premier paquet sur la base des informations d'adresse de premier nœud de service, étant plus particulièrement configurée pour :
si le premier nœud de service est disponible, transférer le premier paquet vers le premier nœud de service ; ou
si le premier nœud de service n'est pas disponible, transférer le premier paquet sur la base des informations d'identifiant de service.

11. Appareil selon la revendication 10, l'unité de traitement étant configurée en outre pour :
déterminer, sur la base d'une liste de filtrage, si le premier nœud de service est ou non disponible, la liste de filtrage servant à indiquer qu'un ou plusieurs nœuds de service ne sont pas disponibles.

12. Appareil selon la revendication 10 ou 11, l'unité de traitement, après avoir transféré le premier paquet sur la base des informations d'identifiant de service, étant configurée en outre pour :
utiliser l'unité émetteur-récepteur pour envoyer un paquet de réinitialisation de connexion à un nœud client, le paquet de réinitialisation de connexion servant à déclencher la réinitialisation, par le nœud client, d'une connexion de protocole de contrôle de transmission, noté TCP.

13. Appareil selon l'une quelconque des revendications 10 à 12, l'unité de traitement, après avoir transféré le premier paquet sur la base des informations d'identifiant de service, étant configurée en outre pour :
obtenir des informations d'adresse de deuxième nœud de service, les informations d'adresse de deuxième nœud de service servant à indiquer une adresse d'un deuxième nœud de service, et les au moins deux nœuds de service comprenant le deuxième nœud de service ; et
utiliser l'unité émetteur-récepteur pour envoyer les informations d'adresse de deuxième nœud de service.

14. Appareil selon l'une quelconque des revendications 9 à 13, l'unité de traitement, avant de recevoir le premier paquet depuis le nœud client, étant configurée en outre pour :
obtenir les informations d'adresse de premier nœud de service ; et
utiliser l'unité émetteur-récepteur pour envoyer un deuxième paquet, le deuxième paquet véhiculant les informations d'adresse de premier nœud de service.

15. Appareil selon la revendication 14, l'unité de traitement, avant d'obtenir les informations d'adresse de premier nœud de service, étant configurée en outre pour :
utiliser l'unité émetteur-récepteur pour recevoir un troisième paquet, le troisième paquet véhiculant les informations d'identifiant de service.
